# EUROPÄISCHE PATENTANMELDUNG

(11) **EP 3 185 404 A1**
(43) Veröffentlichungstag der Anmeldung: **28.06.2017**
(21) Anmeldenummer: 15202002.0
(22) Anmeldetag: 22.12.2015
(51) Int. Cl.: H02K 3/34, H02K 3/30

(54) **ELEKTRISCHE MASCHINE MIT EINEM STATOR SOWIE DEREN VERFAHREN ZUR HERSTELLUNG EINES DERARTIGEN STATORS**

(71) Anmelder: Siemens Aktiengesellschaft, 80333 München (DE)
(72) Erfinder: Ballweg, Marion, 97494 Bundorf (DE)

(57) **Zusammenfassung**

Die Erfindung betrifft eine elektrische Maschine (1) mit einem Stator (2), mit magnetfeldführendem Material, in dem sich im Wesentlichen axial verlaufende Nuten (4) befinden, wobei in den Nuten ein Wicklungssystem (3) vorgesehen ist, das von Tränkharz umgeben und/oder durchsetzt ist, wobei das Tränkharz energieabsorbierende Partikel (7) aufweist.

## Beschreibung

Die Erfindung betrifft eine elektrische Maschine mit einem Stator, in dessen Nuten ein Wicklungssystem angeordnet ist, ein Verfahren zur Herstellung einer derartigen Stators einer elektrischen Maschine und die Verwendung derartiger elektrischer Maschinen.

Das Wicklungssystem elektrischer Maschinen im Stator und/oder Rotor ist elektromagnetischen Schwingungsanregungen ausgesetzt, die aufgrund der ortsfesten Fixierung des Wicklungssystems innerhalb der Nut durch dementsprechende Vergussmassen und Tränkharze in den Aktivteilen der elektrischen Maschine, also Stator und/oder Rotor an diese Aktivteile und damit letztlich an die Umgebung abgegeben werden.

Durch Betrieb von z.B. einer dynamoelektrischen Maschine an einem Umrichter treten derartige Schwingungsanregungen verstärkt auf. Dem wird dadurch versucht zu begegnen, dass die diese elektrischen Maschinen beispielsweise Schalldämmmatten am Gehäuse aufweisen, um dementsprechende Schallemissionen zu reduzieren. Nachteilig dabei ist u.a., dass sich dadurch die Abmessungen der dynamoelektrischen Maschine vergrößern und/oder Kühlluftströme innerhalb der dynamoelektrischen Maschine beeinträchtigt werden.

Ausgehend davon liegt der Erfindung die Aufgabe zugrunde, eine elektrische Maschine, insbesondere dynamoelektrische Maschine zu schaffen, die vor allem Schallemissionen auch bei Umrichterbetrieb der dynamoelektrischen Maschine reduziert.

Die Lösung der gestellten Aufgabe gelingt durch eine elektrische Maschine mit einem Stator, mit magnetfeldführendem Material, in dem sich im Wesentlichen axial verlaufende Nuten befinden, wobei in den Nuten ein Wicklungssystem vorgesehen ist, das von Tränkharz umgeben und/oder durchsetzt ist, wobei das Tränkharz energieabsorbierende Partikel aufweist.

Die Lösung der Aufgabe gelingt ebenso durch ein Verfahren zur Herstellung einer elektrischen Maschine mit einem Stator und/oder Rotors durch folgende Schritte:
- Bereitstellen eines magnetfeldführenden Körpers mit Nuten,
- Einsetzen eines Wicklungssystems,
- Tränken/Vergießen des Wicklungssystems mittels eines mit Partikeln versetzen Tränkharzes oder Vergussmaterials.

Erfindungsgemäß wird nunmehr die Aufgabe der Reduktion der Schallemissionen dadurch gelöst, in dem die schwingungsfähigen Wicklungssysteme, d.h., insbesondere die einzelnen Drähte bzw. elektrischen Leiter in ein Tränkharz bzw. in eine Vergussmasse eingebettet sind, die energieabsorbierte Partikel aufweist. Damit wird vermieden, dass sich derartige Schwingungen auf das benachbarte magnetfeldführende Material, insbesondere die Blechpakete von Stator und/oder Rotor der dynamoelektrischen Maschine fortpflanzen und dementsprechend Schall an die Umgebung emittieren.

In einer Ausgestaltung sind die Partikel, insbesondere fadenförmig ausgeführt, um dabei dann ihre Ausrichtung innerhalb der Nut zwischen den einzelnen Leitern und/oder den Leitern und den umgebenden magnetfeldführenden Material vornehmen zu können. Dabei wird eine Ausrichtung bevorzugt, die besonders energieabsorbierend ist, d.h. bei fadenförmigen Partikeln sind diese beispielsweise entweder mikroschraubenartartig oder knäulartig ausgeführt. Diese Anordnungen der fadenförmigen Partikel verstärken den energieabsorbierenden Effekt.

Die Partikel, insbesondere auch Nanopartikel, also Partikel die in ihrer Ausdehnung kleiner 100 Nanometer sind, werden vorteilhafterweise homogen innerhalb des Tränkharzes angeordnet.

Ansonsten weisen diese fadenförmigen Partikel eine Längenausdehnung von bis zu einigen Millimeter auf, bei dementsprechenden Durchmessern von einigen Mikrometern. Insbesondere bei kürzeren Partikeln kann sich der Durchmesser bis auf einige Nanometer verringern.

Sollten jedoch an besonders schwingungsfähigen Bereichen der Wicklung verstärkt Schwingungsbäuche auftreten, die zu Schallemissionen führen, können dort beim Herstellungsprozess auch verstärkt diese Partikel im Tränkharz vorgesehen werden.

Die Erfindung sowie vorteilhafte Ausgestaltungen der Erfindung werden anhand der folgenden Zeichnungen näher erläutert. Darin zeigen:
- FIG 1: einen prinzipiellen Längsschnitt einer elektrischen Maschine,
- FIG 2: einen Querschnitt aus dem magnetfeldführenden Material des Stators,
- FIG 3: eine Detailansicht.

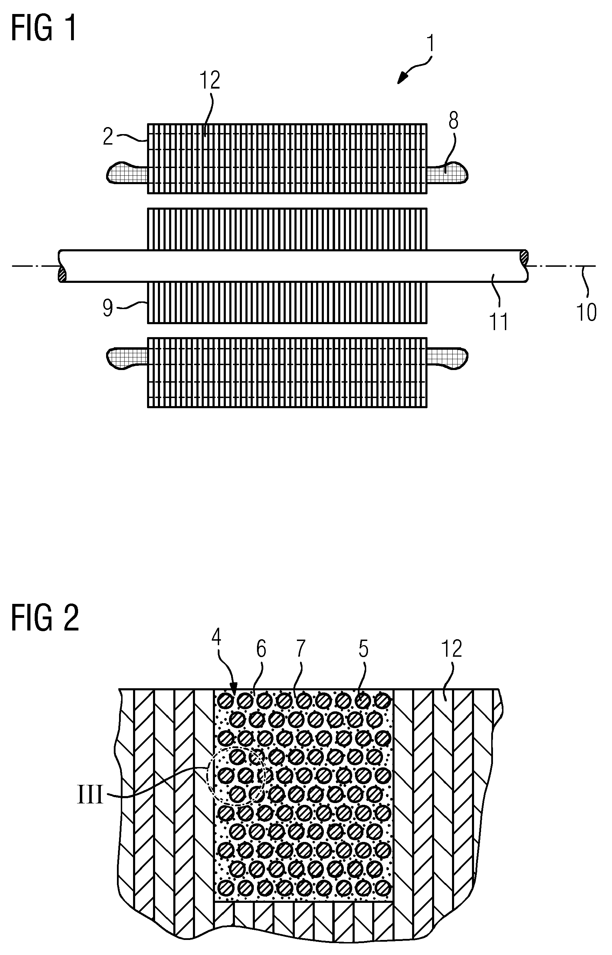

FIG 1 zeigt in einer prinzipiellen Darstellung eine elektrische Maschine 1 mit einem Stator 2, der in dieser Ausführungsform ein Blechpaket 12 aufweist, wobei das magnetfeldführende Teil auch als einstückiges Material z.B. als Kompositwerkstoff vorgesehen sein kann. In diesem magnetfeldführenden Material 12 sind im Wesentlichen axial verlaufende Nuten 4 angeordnet, in denen das Wicklungssystem 3 untergebracht ist, das an den Stirnseiten des Stators 2 Wickelköpfe 8 ausbildet. Über dementsprechende elektromagnetische Wechselwirkungen mit einem Rotor 9 dreht sich dieser Rotor 9 um eine Achse 10 und kann dabei über eine Welle 11 eine Arbeitsmaschine antreiben.
FIG 2 zeigt in einem Ausschnitt des magnetfeldführenden Materials also z.B. des Blechpaketes 12 eine Nut 4 in das eine Spule des Wicklungssystems 3 eingesetzt ist, wobei die Spule aus einer Vielzahl von einzelnen Drähten 5 besteht. Die Drähte 5 weisen Abstände zueinander auf, in die das Tränkharz durch dementsprechend geeignete Methoden eingefüllt wird, um danach ausgehärtet einen festen Verbund mit den magnetfeldführenden Blechpaket 12 zu bilden. Zwischen den Drähten 5 und/oder auch zwischen den Drähten 5 und der Nutwand 4 sind nunmehr Partikel 7 innerhalb des Tränkharzes angeordnet, die energieabsorbierend ausgeführt sind. Dabei liegen die ursprünglich, insbesondere fadenförmig, vorliegenden Partikel 7 im Tränkharz nunmehr aufgrund eines physikalischen oder chemischen Prozess während des Tränkungsprozesses oder danach in schwingungsabsorbierender Form vor, also als knäulartige, schraubenförmige oder kugelförmige Gebilde.

Die dabei eingesetzten Prozesse können beispielsweise eine besondere Wärmebehandlung und/oder ein katalytisch in Gang gesetzter Vorgang im Tränkharz 6 sein, der zu einer energieabsorbierenden Formgebung der Partikel 7 führt.

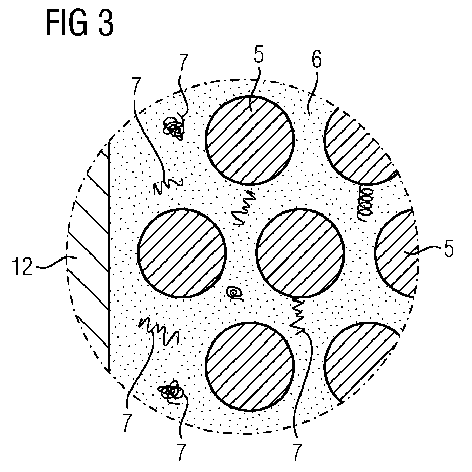

Diese Partikel 7 sind dann spiralförmig, kugelfömig, zickzack-förmig oder knäulartig ausgebildet, wie sie prinzipiell in FIG 3 dargestellt sind.

Die Erfindung ist dabei nicht nur auf die Anwendung bei Aktivteilen von dynamoelektrischen Maschinen 1, wie die Statoren und/oder Rotoren von Motoren oder Generatoren beschränkt, sondern eignet sich auch für andere elektrische Maschinen, wie z.B. Transformatoren.

Die Einsatzgebiete dementsprechender dynamoelektrischer Maschinen sind beispielsweise die Verkehrstechnik, wie Antriebsmotoren von Schienenfahrzeugen und E-Cars, Antriebe in der Industrietechnik.

## Patentansprüche

1. Elektrische Maschine (1) mit einem Stator (2), mit magnetfeldführendem Material, in dem sich im Wesentlichen axial verlaufende Nuten (4) befinden, wobei in den Nuten (4) ein Wicklungssystem (3) vorgesehen ist, das von Tränkharz umgeben und/oder durchsetzt ist, wobei das Tränkharz energieabsorbierende Partikel (7) aufweist.

2. Elektrische Maschine (1) nach Anspruch 1, **dadurch gekennzeichnet, dass** die Partikel (7) energieabsorbierend z.B. geknäult und/oder spiralförmig und/oder kugelförmig ausgebildet sind.

3. Elektrische Maschine (1) nach Anspruch 1 oder 2, **dadurch gekennzeichnet, dass** die Partikel (7) an den zu erwartenden schwingungsrelevanten Abschnitten oder Bauteilen der Maschine (1) angeordnet sind.

4. Elektrische Maschine (1) nach einem der vorhergehenden Ansprüche, **dadurch gekennzeichnet, dass** die Partikel (1) innerhalb des Tränkharzes homogen oder gemäß einer vorgegeben Verteilung angeordnet sind.

5. Verfahren zur Herstellung einer elektrischen Maschine (1) mit einem Stator und/oder Rotor durch folgende Schritte:
- Bereitstellen eines magnetfeldführenden Körpers mit Nuten (4),
- Einsetzen eines Wicklungssystems (3),
- Tränken/Vergießen des Wicklungssystems (3) mittels eines mit Partikeln (7) versetzen Tränkharzes oder Vergussmaterials.

6. Verfahren nach Anspruch 5, **dadurch gekennzeichnet, dass** die Partikel (7) beim Tränken/Vergießen des Wicklungssystems (3) im wesentlichen fadenförmig im Tränkharz vorliegen.

7. Verfahren nach Anspruch 5 oder 6, **dadurch gekennzeichnet, dass** während oder nach dem Einfügen des Tränkharzes in das Wicklungssystem sich die vorzugsweise fadenförmigen Partikel (7) im Tränkharz durch physikalische und/oder chemische Vorgänge innerhalb dieses Tränkharzes zu energieabsorbierenden Gebilden wie Knäulen und/oder Spiralen und/oder kugelförmigen Gebilden ausbilden.

8. Verfahren nach Anspruch 6 oder 7, **dadurch gekennzeichnet, dass** die Verteilung der Partikel (7) innerhalb des ausgehärteten Tränkharzes homogen oder gemäß einer vorgegebenen Verteilung, insbesondere an Schwingungsbäuchen des Wicklungssystems (3) angeordnet ist.

9. Verwendung derartiger elektrischer Maschinen (1) bei Antrieben in der Industrie und in der Verkehrstechnik, als auch in der Energietechnik in Generatoren oder Transformatoren.
